# EUROPEAN PATENT APPLICATION

(11) **EP 4 799 978 A1**
(43) Date of publication of application: **02.09.2026**
(21) Application number: 24887329.1
(22) Date of filing: 16.05.2024
(51) Int. Cl.: C01B 32/05, H01M 4/587, H01M 10/0525, H01M 10/054

(54) **HARD CARBON, PREPARATION METHOD, SECONDARY BATTERY, AND ELECTRIC DEVICE**

(30) Priority: 08.11.2023 CN 202311479725
(71) Applicant: Contemporary Amperex Technology Co., Limited, Ningde, Fujian 352100 (CN)
(72) Inventor: WU, Kai, Ningde, Fujian 352100 (CN); ZHOU, Yi, Ningde, Fujian 352100 (CN); ZHANG, Ming, Ningde, Fujian 352100 (CN)
(74) Representative: Ziebig Hengelhaupt Intellectual Property Attorneys Patentanwaltskanzlei PartGmbB
(86) International application number: PCT/CN2024/093698
(87) International publication number: WO 2025/097705

(57) **Abstract**

The present application provides a hard carbon, a preparation method, a secondary battery, and an electric device. Relative to the total mass of the hard carbon, the total mass ratio of water-soluble cations in the hard carbon does not exceed 500 ppm. The hard carbon can improve the viscosity of a negative electrode slurry and can improve the cycle performance of a battery.

## Description

### CROSS-REFERENCE TO RELATED APPLICATIONS

The present application claims priority to Chinese Patent Application 202311479725.9, entitled "HARD CARBON, PREPARATION METHOD, SECONDARY BATTERY, AND ELECTRICAL APPARATUS" filed on November 08, 2023, which is incorporated by reference in the present application.

### TECHNICAL FIELD

The present application relates to the technical field of secondary batteries, and relates to a hard carbon, a preparation method, a secondary battery, and an electrical apparatus.

### BACKGROUND

In recent years, secondary batteries have been widely used in energy storage power systems such as hydropower, thermal power, wind power and solar power stations, as well as the fields of power tools, electric bicycles, electric motorcycles, electric vehicles, military equipment, aerospace and other fields.

Hard carbon is a common negative electrode material used in a sodium secondary battery. However, due to high impurity content, the hard carbon has problems such as poor stability and high processing difficulty during battery preparation. Therefore, it is still needed to improve existing hard carbon.

### SUMMARY

The present application is proposed in view of the above subject, and its objective is to provide a hard carbon, which can improve the viscosity of a slurry containing the hard carbon, thereby improving the processability of the hard carbon.

In a first aspect, the present application provides a hard carbon, and based on the total mass of the hard carbon, the total mass ratio of water-soluble cations in the hard carbon does not exceed 500 ppm.

Studies show that the processability of the hard carbon is closely related to the content of the water-soluble cations in the hard carbon. Precursors used for preparing the hard carbon inevitably contain metal impurities which will remain in the final hard carbon product after a sintering process. During preparing a negative electrode slurry, the water-soluble cations in the hard carbon will inhibit the ionization of thickeners (such as sodium carboxymethyl cellulose) in the slurry, and shift the ionization equilibrium toward non-ionization equilibrium, which leads to a decrease in the charge density on the thickener, such that the electrostatic repulsion between charges is reduced, and the thickener is difficult to fully extend under electrostatic repulsion, as a result, a contact area between the thickener (such as sodium carboxymethyl cellulose) and a solvent (such as water) decreases, which makes the thickener and the solvent difficult to fully associate, and the thickener is hard to play a thickening effect. In addition, divalent cations and trivalent cations in the water-soluble ions easily coordinate with carboxyl groups in the thickener (such as sodium carboxymethyl cellulose), which further decreases association sites between the thickener and water molecules, thus further degrading the thickening effect, significantly lowering the viscosity of the negative electrode slurry. If the total mass ratio of the water-soluble cations in the hard carbon is controlled below 500 ppm, the thickener in the slurry can fully perform the thickening function, such that the slurry has suitable and stable viscosity, which is favorable for improving the processability of a battery.

It is to be understood that because some metal impurities in the hard carbon are in a bulk structure or are difficult to dissolve in aqueous solvents, the mass ratio of the water-soluble cations in the hard carbon is not equivalent to the mass ratio of metal elements in the hard carbon. Compared to the mass ratio of metal elements in the hard carbon, the mass ratio of the water-soluble cations in the hard carbon provides more guidance for improving processability. By monitoring the total mass ratio of the water-soluble cations in the hard carbon at an early stage, the problem of poor coating quality of the negative electrode slurry during later coating processes can be effectively reduced. Moreover, the total mass ratio of the water-soluble cations in the hard carbon serves as a monitoring indicator, thus the problem of different standards caused by different impurity element contents in the hard carbon from different precursors can be reduced, so it is universally applicable to the hard carbon from different precursors.

In any embodiments, based on the total mass of the hard carbon, the total mass ratio of water-soluble cations in the hard carbon is 5-450 ppm.

If the total mass ratio of the water-soluble cations is 5-450 ppm, the hard carbon can provide the negative electrode slurry with an appropriate viscosity, and meanwhile, excessive defects cannot be introduced into the hard carbon while the total mass of water-soluble cations is reduced, such that the hard carbon has both good processability and electrochemical performance, resulting in a secondary battery with high initial efficiency and cycle stability.

In any embodiment, the water-soluble cations include at least one selected from the group consisting of sodium ions (Na⁺), potassium ions (K⁺), magnesium ions (Mg²⁺), calcium ions (Ca²⁺), and aluminum ions (Al³⁺).

In any embodiment, based on the total mass of the hard carbon, the total mass ratio of the silicon element in the hard carbon does not exceed 570 ppm, optionally, 300-550 ppm.

The silicon element in biomass-based hard carbon acts as a pore-forming agent during a sintering process and remains in a bulk and on a surface of the biomass-based hard carbon after sintering. The hard carbon with the mass ratio of the silicon element not greater than 570 ppm provides the slurry with an appropriate and stable viscosity, which is beneficial for improving the processability of the battery.

The hard carbon with the mass ratio of the silicon element of 300-550 ppm can provide the negative electrode slurry with an appropriate viscosity and relatively low impurity content, and meanwhile, excessive defects cannot be introduced into the hard carbon or the pore-forming function of the hard carbon is influenced while the total mass of the silicon element is reduced, such that the hard carbon has both good processability and electrochemical performance, resulting in the secondary battery with high specific capacity, initial efficiency, and cycle stability.

In any embodiment, based on the total mass of the hard carbon, the mass ratio of any one of the water-soluble sodium ions, water-soluble potassium ions, water-soluble magnesium ions, water-soluble calcium ions, and water-soluble aluminum ions in the hard carbon is 1-260 ppm.

In any embodiment, the true density of the hard carbon at room temperature is 1.45g/cm³-1.65g/cm³, optionally 1.45g/cm³-1.6g/cm³.

The hard carbon with a true density of 1.45g/cm³-1.65g/cm³ has certain porosity. The filling of hard carbon micropores by active metal ions such as sodium ions is an important mechanism for capacity performance, and therefore, the hard carbon with the true density within the above range has a high gram volume.

In a second aspect, the present application provides a method for preparing a hard carbon, and the preparation method includes a step of washing with water to ensure that based on the mass of the hard carbon, the total mass ratio of the water-soluble cations in the hard carbon does not exceed 500 ppm, optionally, 5-450 ppm.

Washing with water has the advantage of being gentle, effectively reducing the content of the water-soluble ions in the hard carbon without excessive defects on the surface of the hard carbon, thereby making the battery have good processability, initial efficiency, and cycling performance.

In any embodiment, the preparation method specifically includes the following steps: providing a biomass-based carbon source; pre-sintering the carbon source to prepare a precursor; sintering the precursor at a high temperature to prepare a product; and washing the product with water to prepare the hard carbon.

If the step of washing with water before sintering at high temperature, sufficient inorganic elements can remain during the sintering process to form pores, such that the biomass-based hard carbon has both good porosity and specific capacity, and moreover, the water-soluble cations in the biomass-based hard carbon are within an appropriate range, thus the slurry has high viscosity and good coating performance.

In any embodiment, the precursor and the product are not treated with acid.

If the precursor is treated with acid, micropores formed during the pre-sintering process in the precursor will be closed or shrunk, resulting in a decrease in the true density of hard carbon and a decline in gram volume; if the product is treated with acid, defects are easily introduced on the surface/micropores of the hard carbon, resulting in a decrease in the gram volume and degrading of the initial efficiency and cycle stability of the secondary battery.

In a third aspect, the present application provides a secondary battery, which includes the hard carbon in any embodiment or the hard carbon prepared by the preparation method in any embodiment.

In a fourth aspect, the present application provides an electrical apparatus, which includes the sodium secondary battery in the third aspect.

### BRIEF DESCRIPTION OF THE DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

### Description of reference numerals:

1 battery pack; 2 upper box; 3 lower box; 4 battery module; 5 secondary battery; 51 case; 52 electrode assembly; 53 cover plate.

### DETAILED DESCRIPTION

Embodiments of a hard carbon, a preparation method, a secondary battery, and an electrical apparatus of the present application are specifically described below in detail with appropriate reference to the accompanying drawings. However, unnecessary detailed explanations may be omitted. For example, detailed description of a well-known matter, and a duplicate description of the actual same structure are omitted. This is to prevent the following description from becoming unnecessarily lengthy and to facilitate the understanding of those skilled in the art. In addition, the accompanying drawings and subsequent descriptions are provided for those skilled in the art to fully understand the present application, and are not intended to limit the subject matter recited in the claims.

In the present application, the "range" is defined in a form of a lower limit and an upper limit, and a given range is defined by selecting a lower limit and an upper limit, which define the boundaries of a particular range. The range defined by such way can be with or without end values, and can be arbitrarily combined, i.e., any lower limit can be combined with any upper limit to form a range. For example, if ranges of 60-120 and 80-110 are listed for a particular parameter, it is to be understood that the ranges of 60-110 and 80-120 are also expected. In addition, if the minimum range values 1 and 2 are listed, and if the maximum range values 3, 4 and 5 are listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed in this article, and "0-5" is just an abbreviated representation of these combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), indicating that the method may include steps (a) and (b) in sequence, and may also include steps (b) and (a) in sequence. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specified, the terms "comprise", "comprising", "include" and "including" mentioned in the present application may be open-ended or closed-ended. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

According to the hard carbon source, the hard carbon mainly includes a biomass-based hard carbon, a carbohydrate hard carbon, and a resin-based hard carbon. The biomass-based hard carbon has biomass materials as raw materials and has moderate performance, wide material availability, and lower cost, and it is a negative electrode active material with great potential in a sodium secondary battery. However, during the mixing preparation of the negative electrode slurry, the biomass-based hard carbon has disadvantages such as large differences in slurry viscosity, poor stability, and poor reproducibility, and it often results in excessively low viscosity of the slurry and the slurry cannot be extended and coated, or after being coated, the slurry is easy to gather at edges due to low viscosity and forms edge bulges, which may collapse during cold pressing, resulting in a low yield, poor uniformity, and high batch-to-batch difference of the prepared negative electrode plates, which is unfavorable for effectively improving the performance of the secondary battery.

### [Hard carbon]

Based on this, the present application provides a hard carbon, and based on the mass of the hard carbon, the total mass ratio of water-soluble cations in the hard carbon do not exceed 500 ppm.

The term "ppm" here refers to one part per million here.

The term "water-soluble cations" here refers to metal cations that are soluble in water.

In some embodiments, the water-soluble cations comprise at least one selected from the group consisting of sodium ions (Na⁺), potassium ions (K⁺), magnesium ions (Mg²⁺), calcium ions (Ca²⁺), and aluminum ions (Al³⁺).

In the present application, based on the mass of the said hard carbon, the total mass ratio of the water-soluble cations can be tested by the following method. As an example, 100 g of hard carbon is dispersed in 400 g of aqueous solution to prepare a slurry with solid content of 20%; after the slurry is stirred and dispersed at a speed of 1,200 r/min for 120 min, the obtained hard carbon slurry is filtered, and the filtrate is collected; 8 mL of the filtrate is measured and added to 2 mL of Lefort aqua regia (volume ratio of HNO₃: HCl is 3:1) for microwave digestion, and a microwave digestion instrument can be Anton-Paar Multiwave 7000, with a microwave frequency of 2,450 MHz and a digestion time of 5 min. Then, a solution to be tested is transferred to an inductively coupled plasma optical emission spectrometer to test the types and mass of ions in the filtrate, and the inductively coupled plasma optical emission spectrometer can be a single quadrupole-rod inductively coupled plasma mass spectrometer (SQ-ICP-MS) of Thermo Scientific. According to the test results, the mass concentration of water-soluble cations in the solution to be tested is a ppm, in units of g/mL. The mass concentration of the water-soluble cations in the solution (a ppm g/mL) is multiplied by the solution volume (10 mL) to obtain the total mass (10a ppm, units: g) of the water-soluble cations in the test solution. The total mass of the water-soluble cations in the solution to be tested is converted into the total mass of the water-soluble cations in the slurry (500a ppm, units: g); and the total mass (5a ppm g/g) of the water-soluble cations per unit mass of hard carbon is obtained by dividing the total mass of the water-soluble cations in the slurry by the mass of the hard carbon in the slurry, which is the mass ratio of the water-soluble cations based on the mass of the hard carbon.

In some embodiments, based on the mass of the hard carbon, the total mass ratio of the water-soluble cations in the hard carbon is 5 ppm, 50 ppm, 100 ppm, 150 ppm, 200 ppm, 250 ppm, 300 ppm, 350 ppm, 400 ppm, 450 ppm, 500 ppm, or any value range between any two of them.

In some embodiments, the hard carbon includes the biomass-based hard carbon.

Studies show that the processability of the hard carbon is closely related to the content of the water-soluble cations in the hard carbon. The biomass inevitably contains metal impurities which will remain in the final hard carbon product after a sintering process. During preparing a negative electrode slurry, the water-soluble cations in the hard carbon will inhibit the ionization of thickeners (such as sodium carboxymethyl cellulose) in the slurry, and shift the ionization equilibrium toward non-ionization equilibrium, which leads to a decrease in the charge density on the thickener, such that the electrostatic repulsion between charges is reduced, and the thickener is difficult to fully extend under electrostatic repulsion, as a result, a contact area between the thickener (such as sodium carboxymethyl cellulose) and a solvent (such as water) decreases, which makes the thickener and the solvent difficult to fully associate, and the thickener is hard to play a thickening effect. In addition, divalent cations and trivalent cations in the water-soluble ions easily coordinate with carboxyl groups in the thickener (such as sodium carboxymethyl cellulose), which further decreases association sites between the thickener and water molecules, thus further degrading the thickening effect, significantly lowering the viscosity of the negative electrode slurry. If the total mass ratio of the water-soluble cations in the hard carbon is controlled within above range, the thickener in the slurry can fully perform the thickening function, such that the slurry has suitable and stable viscosity, which is favorable for improving the processability of a battery.

It is to be understood that because some metal impurities in the hard carbon are in a bulk structure or are difficult to dissolve in aqueous solvents, the mass ratio of the water-soluble cations in the hard carbon is not equivalent to the mass ratio of metal elements in the hard carbon. Compared to the mass ratio of metal elements in the hard carbon, the mass ratio of the water-soluble cations in the hard carbon provides more guidance for improving processability. By monitoring the total mass ratio of the water-soluble cations in the hard carbon at an early stage, the problem of poor coating quality of the negative electrode slurry during later coating processes can be effectively reduced. Moreover, the total mass ratio of the water-soluble cations in the hard carbon serves as a monitoring indicator, thus the problem of different standards caused by different impurity element contents in the biomass-based hard carbon from different precursors can be reduced, so it is universally applicable to the biomass-based hard carbon from different precursors.

In some embodiments, based on the mass of the hard carbon, the total mass ratio of the water-soluble cations in the hard carbon is 5-450 ppm.

The hard carbon with the water-soluble cations within the above mass ratio range can provide the negative electrode slurry with an appropriate viscosity, and meanwhile, excessive defects cannot be introduced into the hard carbon while the total mass of water-soluble cations is reduced, such that the hard carbon has both good processability and electrochemical performance, resulting in a secondary battery with high initial efficiency and cycle stability.

In some embodiments, based on the total mass of the hard carbon, the mass ratio of the silicon element in the hard carbon does not exceed 570 ppm.

In the present application, the mass ratio of silicon can be tested by any method known in the art. As an example, a plasma spectrometer is used for testing. 0.2 g of hard carbon is weighed and added to 10 ml of Lefort aqua regia (a mixed solution of HNO₃ and HCl prepared in a volume ratio of 3:1); the sample is subjected to microwave digestion in a microwave digestion instrument, and the microwave digestion instrument is Anton-Paar Multiwave 7000, with a microwave frequency of 2450 MHz at a digestion time of 5 min. Then the sample is transferred into the plasma spectrometer for testing, thus obtaining the mass of silicon element per unit mass of the hard carbon.

In some embodiments, based on the total mass of the hard carbon, the mass content of the silicon element in the hard carbon is optionally 300 ppm, 350 ppm, 400 ppm, 450 ppm, 500 ppm, 550 ppm, or any value range between any two of them.

The silicon element in biomass-based hard carbon acts as a pore-forming agent during a sintering process and remains in a bulk and on a surface of the biomass-based hard carbon after sintering. The hard carbon with the mass ratio of the silicon element not greater than 570 ppm provides the slurry with an appropriate and stable viscosity, which is beneficial for improving the processability of the battery.

In some embodiments, based on the total mass of the hard carbon, the mass ratio of the silicon element in the hard carbon is 300-550 ppm.

The hard carbon with the silicon element within the above mass ratio range can provide the negative electrode slurry with an appropriate viscosity and relatively low impurity content, and meanwhile, excessive defects cannot be introduced into the hard carbon or the pore-forming function of the hard carbon is influenced while the total mass of the silicon element is reduced, such that the hard carbon has both good processability and electrochemical performance, resulting in the secondary battery with high specific capacity, initial efficiency, and cycle stability.

In some embodiments, based on the total mass of the hard carbon, the mass ratio of any one of water-soluble sodium ions, water-soluble potassium ions, water-soluble magnesium ions, water-soluble calcium ions, and water-soluble aluminum ions in the hard carbon is 1- 260 ppm.

In some embodiments, based on the total mass of the hard carbon, the mass ratio of any one of the water-soluble sodium ions, water-soluble potassium ions, water-soluble magnesium ions, water-soluble calcium ions, or water-soluble aluminum ions in the hard carbon is 1 ppm, 5 ppm, 25 ppm, 50 ppm, 75 ppm, 100 ppm, 125 ppm, 150 ppm, 175 ppm, 200 ppm, 230 ppm, 260 ppm, or any value range between any two of them.

In some embodiments, the true density of the hard carbon at room temperature is 1.45g/cm³-1.65g/cm³. In some embodiments, the true density of the hard carbon at room temperature is optionally 1.45g/cm³-1.6g/cm³.

The true density refers to the mass of a material per unit actual volume in an absolutely compact state (excluding internal air voids, namely, not containing open and closed pores as well as interparticle air voids).

In the present application, the true density of the hard carbon has the meaning well-known in the field and can be tested by the methods known in the field. As an example, the mass M of hard carbon is weighed and placed in a true density tester (Accu Pyc II 1340 analyzer) at room temperature (15°C-25°C); a test system is sealed, and helium is charged according to the procedure. The gas pressure in a sample chamber and an expansion chamber is detected and the gas volume in both the sample chamber and the expansion chamber is calculated according to an ideal gas state equation, so as to obtain the gas volume of the sample chamber and the expansion chamber; and the gas volume of the hard carbon arranged under certain temperature and pressure conditions can be obtained by the difference value between the sample chamber and the expansion chamber, which is the true volume V of the hard carbon. The true density of hard carbon is shown as: hard carbon mass M/ true volume V of hard carbon, and the unit of the true density is g/cm³.

In some embodiments, the true density of the hard carbon at room temperature is 1.45 g/cm³, 1.5 g/cm³, 1.55 g/cm³, 1.6 g/cm³, 1.65 g/cm³, or any value range between any two of them.

The hard carbon with the true density in above range has certain porosity. The filling of hard carbon micropores by active metal ions such as sodium ions is an important mechanism for capacity performance, and therefore, the hard carbon with the true density within the above range has a high gram volume.

In an embodiment of the present application, a method for preparing a hard carbon is provided. The preparation method includes a step of washing with water to ensure that based on the mass of the hard carbon, the total mass ratio of the water-soluble cations in the hard carbon does not exceed 500 ppm. In some embodiments, the total mass ratio of the water-soluble cations in the hard carbon is optionally 5-450 ppm.

The "washing with water" here refers to a process of cleaning the product with an aqueous solvent. The aqueous solvent includes, but is not limited to, deionized water, deionized water, and mixed solutions of other solvents.

In some embodiments, the temperature for washing with water is 1°C-85°C. In some embodiments, the temperature for washing with water is optionally 5°C-40°C.

In some embodiments, the temperature for washing with water is 1°C, 10°C, 30°C, 50°C, 65°C, 75°C, 85°C, or a value within any range between any two of them.

In some embodiments, the washing with water is carried out for 0.5-1 h.

In some embodiments, the washing with water is carried out for 0.5 h, 0.6 h, 0.7 h, 0.8 h, 0.9 h, 1 h, or any value within the range between any two of them.

In some embodiments, stirring is accompanied during washing with water. The stirring speed is 400-1,200 r/min.

In some embodiments, the stirring speed during washing with water is 400 r/min, 500 r/min, 600 r/min, 700 r/min, 800 r/min, 900 r/min, 1,000 r/min, 1,100 r/min, 1,200 r/min, or any value between any two of them.

Washing with water has the advantage of being gentle, effectively reducing the content of the water-soluble ions in the hard carbon without excessive defects on the surface of the hard carbon, thereby making the battery have good processability, initial efficiency, and cycling performance.

In some embodiments, the preparation method specifically includes the following steps: providing a biomass-based carbon source; pre-sintering the carbon source to prepare a precursor; sintering the precursor at a high temperature to prepare a product; and washing the product with water to prepare the hard carbon.

In some embodiments, the preparation method specifically includes the following steps: providing the biomass-based carbon source; pre-sintering the carbon source to prepare the precursor; and washing the precursor with water and sintering at high temperature to prepare the hard carbon.

In some embodiments, the preparation method specifically includes the following steps: providing the biomass-based carbon source; pre-sintering the carbon source to prepare the precursor; washing the precursor with water and sintering at high temperature to prepare a product; and washing the product with water to prepare the hard carbon.

If the step of washing with water is carried out after sintering at high temperature rather than before, sufficient inorganic elements will remain during the sintering process to form pores, and the hard carbon has both good porosity and gram volume, moreover, the water-soluble cations in the hard carbon are within a proper range, and therefore, the slurry has high viscosity and good coating performance.

In some embodiments, the biomass-based carbon source includes at least one selected from the group consisting of sorghum stalks, sawdust, walnut shells, sugarcane bagasse, rice husks, wheat husks, coconut shells, apricot shells, peanut shells, wood, lignin, grapefruit peel, or animal and plant tissues.

In some embodiments, the biomass-based carbon source is the sorghum stalk. In some embodiments, the biomass-based carbon source is the coconut shell. In some embodiments, the biomass-based carbon source is the wood.

Compared with other carbon source precursors, the biomass-based carbon sources have the advantages of abundant resources and cost savings.

In some embodiments, the temperature for pre-sintering is 300°C-900°C; the environment for pre-sintering is nitrogen or air; the pre-sintering is carried out for 1-4 h.

In some embodiments, the temperature for pre-sintering is optionally 300°C, 400°C, 500°C, 600°C, 700°C, 800°C, 900°C, or any value range between any two of them; the environment for pre-sintering is nitrogen or air; the pre-sintering is optionally carried out for 1 h, 2 h, 3 h, 4 h, or any value range between any two of them.

In some embodiments, the temperature for sintering at high temperature is 1,000°C-1,400°C; the environment for sintering at high temperature is an inert atmosphere, optionally, at least one selected from the group consisting of nitrogen, argon, and helium; and the sintering at high temperature is carried out for 1-5 h.

In some embodiments, the temperature for sintering at high temperature is optionally 1,000°C, 1,100°C, 1,200°C, 1,300°C, 1,400°C, or any value range between any two of them; and the sintering at high temperature is optionally carried out of 1 h, 2 h, 3 h, 4 h, 5 h, or any value range between any two of them.

In some embodiments, the precursor and the product are not treated with acid.

The "acid treatment' refers to a process of treating materials with acidic substances. In some embodiments, the acidic substances include, but are not limited to, hydrochloric acid, sulfuric acid, nitric acid, phosphoric acid, hydrofluoric acid, and mixtures thereof.

If the precursor is treated with acid, micropores formed during the pre-sintering process in the precursor will be closed or shrunk, resulting in a decrease in the true density of hard carbon and a decline in gram volume; if the product is treated with acid, defects are easily introduced on the surface/micropores of the hard carbon, resulting in a decrease in the gram volume and degrading of the initial efficiency and cycle stability of the secondary battery.

In one embodiment of the present application, a method for treating hard carbon is provided. The treatment method includes: dispersing the hard carbon in an aqueous solvent to obtain a slurry, filtering the slurry to obtain a filtrate; and collecting supernatant liquor of the filtrate for inductively coupled plasma optical emission spectrometry testing to obtain the total mass of water-soluble cations in the filtrate.

By means of above treatment method, the mass of the water-soluble cations in hard carbon can be accurately detected, thus effectively reducing the impact of different types of biomass raw materials on the species and content of impurity elements in the hard carbon; and a universally applicable measurement method is provided for evaluating the processability of the hard carbon.

In some embodiments, the solid content of the slurry is 45%-53%.

In some embodiments, the solids content of the slurry is 45%, 46%, 47%, 48%, 49%, 50%, 51%, 52%, 53%, or any value range between any two of them.

In some embodiments, in response to the mass ratio of the water-soluble cations being greater than 500 ppm based on the total mass of the hard carbon, the hard carbon is washed with water.

By means of a simple water washing process and evaluation standards, the process stability in the preparation of the hard carbon can be significantly improved, low-cost biomass-based hard carbon materials that cannot be originally used for electrode fabrication and has low cost and high impurity content are successfully used for electrode preparation, thereby reducing the production cost of the battery.

### [Negative electrode slurry]

The negative electrode slurry includes the hard carbon in some embodiments, the hard carbon prepared by the preparation method in some embodiments, or the hard carbon treated by the treatment method in some embodiments.

In some embodiments, the solid content of the negative electrode slurry is 45%-53%, and the viscosity is 4,000-20,000 mPa·s.

In the present application, the viscosity of the negative electrode slurry can be tested by methods known in the art, for example, the method of selecting an appropriate rotor, fixing viscometer, placing the negative electrode slurry below the viscometer so that the slurry just covers an index line of the rotor; instrument model: Shanghai Fangrui NDJ-5S; rotor: #63 (2,000-10,000 mPa.s), #64 (10,000-50,000 mPa.s); rotation speed: 12 r/min; test temperature: 25°C; test time: 5 min; and the data is read once the reading stabilizes.

In some embodiments, the solids content of the slurry is 45%, 46%, 47%, 48%, 49%, 50%, 51%, 52%, 53%, or any value range between any two of them.

In some embodiments, the viscosity of the negative electrode slurry is optionally 4,000 mPa·s, 5,000 mPa·s, 6,000 mPa·s, 7,000 mPa·s, 8,000 mPa·s, 9,000 mPa·s, 10,000 mPa·s, 12,000 mPa·s, 14,000 mPa·s, 16,000 mPa·s, 18,000 mPa·s, 20,000 mPa·s, or any value range between any two of them.

The negative electrode slurry with the solid content and viscosity within the above range has an appropriate viscosity, which can achieve uniform coating, thus improving the cycling performance of the battery.

In some embodiments, the negative electrode slurry includes the thickener, and the thickener can be any one selected from the group consisting of sodium carboxymethyl cellulose or modified sodium polyacrylate.

In some embodiments, the negative electrode slurry includes the solvent, the solvent includes the aqueous solvent, such as deionized water.

### [Negative electrode plate]

The negative electrode plate includes a negative electrode film layer prepared from the negative electrode slurry in some embodiments.

In some embodiments, the negative electrode plate includes a negative electrode current collector and the negative electrode film layer disposed on at least one surface of the negative electrode current collector; the negative electrode film layer includes a negative electrode active material, and the negative electrode active material includes the hard carbon in some embodiments, the hard carbon prepared by the preparation method in some embodiments, or the hard carbon treated by the treatment method in some embodiments.

As an example, the negative electrode current collector has two opposite surfaces in the thickness direction, and the negative electrode material layer is arranged on any one or both of the two opposite surfaces of the negative electrode current collector.

In some embodiments, the negative electrode current collector can be a metal foil or a composite current collector. For example, if it is the metal foil, a copper foil or an aluminum foil can be adopted. The composite current collector may include a polymer material substrate and a metal layer formed on at least one surface of the polymer material substrate. The composite current collector can be formed by forming a metal material (copper, copper alloy, aluminum, aluminum alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

In some embodiments, the negative electrode film layer optionally includes the binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent can be at least one selected from the group of superconducting carbon, acetylene black, carbon black, Ketjen black, carbon dots, carbon nanotubes, graphene and carbon fibers.

In some embodiments, the negative electrode plate can be prepared by the following steps: dispersing the components for preparing the negative electrode plate, such as the negative electrode active material, the conductive agent, the binder and any other component into a solvent (such as deionized water) to form negative electrode slurry; and coating the negative electrode current collector with the negative electrode slurry, and performing processes of drying, cold pressing and the other processes to obtain the negative electrode plate.

### [Positive electrode plate]

The positive electrode plate usually includes a positive electrode current collector and a positive electrode film layer provided on at least one surface of the positive electrode current collector, and the positive electrode film layer includes a positive electrode active material.

As an example, the positive electrode current collector has two opposite surfaces in a thickness direction thereof, and the positive electrode film layer is provided on either or both of the opposite surfaces of the positive electrode current collector.

In some embodiments, the positive electrode current collector can be a metal foil or a composite current collector. For example, an aluminum foil may be used as the metal foil. The composite current collector may include a polymer base layer and a metal layer formed on at least one surface of the polymer base layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer optionally includes the binder. As an example, the binder can include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylenehexafluoropropylene copolymer and fluorine~ acrylate resin.

In some embodiments, the positive electrode film layer also optionally includes the conductive agent. As an example, the conductive agent can include at least one of superconducting carbon, acetylene black, carbon black, Ketjen black, carbon dots, carbon nanotubes, graphene and carbon nanofibers.

In some embodiments, the positive electrode active material can be the well-known positive electrode active material for the battery in the art. As an example, the positive electrode active material can include at least one of the following materials: Prussian blue analogs, sodium-containing phosphates, sodium-containing transition metal oxides, or modified compounds thereof. However, the present application is not limited to these materials, and other conventional materials that can be used as the positive electrode active material of the battery can also be used. These positive electrode active materials can be independently used, or more than two are combined to use. The Prussian blue analog is NaxP[R(CN)₆]_{δ}•zH₂O, in which, P and R are each independently selected from at least one transition metal element, 0<x≤2, 0<δ≤1, and 0≤z≤10; the sodium-containing phosphate is Na_{b}Me_{c}(PO₄)_{d}O₂X, in which, Me is one or more selected from the group consisting of Ti, Cr, Mn, Fe, Co, Ni, V, Cu, and Zn, X is one or more selected from the group consisting of F, Cl, and Br, 0<b≤4, 0<c≤2, 1≤d≤3; the sodium-containing transition metal oxide is NaₐM_{b}N_{c}Fe_{d}MnₑO₂, in which, M and N include at least one element from the group consisting of Sc, Ti, V, Cr, Co, Ni, Cu, Zn, Zr, Nb, Mo, Sn, Hf, Ta, W, and Pb, 0.05≤b≤0.2, 0.2≤c≤0.3, 0.2≤d≤0.3, 0.3≤e≤0.4, 0.75≤a/(b c d e)≤1.

In some embodiments, the positive electrode plate can be prepared by the following steps: dispersing the components for preparing the positive electrode plate, such as the positive electrode active material, the conductive agent, the binder and any other component, in a solvent (such as N-methyl-pyrrolidone) to form positive electrode slurry; and coating a positive electrode current collector with the positive electrode slurry performing drying, cold pressing and other processes to obtain the positive electrode plate.

### [Electrolyte]

The electrolyte plays a role in conducting ions between the positive electrode sheet and negative electrode sheet. The type of the electrolyte is not specifically limited in the present application and can be selected according to requirements. For example, the electrolyte may be liquid, gelled, or all solid.

In some embodiments, an electrolyte solution is used as the electrolyte. The electrolyte solution includes an electrolyte salt and a solvent.

In some embodiments, the electrolyte solution includes an electrolyte salt, and the electrolyte salt is at least one selected from the group consisting of NaPF₆, NaBF₄, NaN(SO₂F)₂(NaFSI), NaClO₄, NaAsF₆, NaB(C₂O₄)₂(NaBOB), NaBF₂(C₂O₄)(NaDFOB), NaN(SO₂RF)₂, and NaN(SO₂F)(SO₂RF), in which, RF refers to C_{b}F_{2b+1}, and b is an integer of 1-10. In some embodiments, b is optionally an integer from 1 to 3.

In some embodiments, the electrolyte salt is one or more selected from the group consisting of NaPF₆, NaN(SO₂F)₂, NaN(CF₃SO₂)₂, NaB(C₂O₄)₂, and NaBF₂(C₂O₄). In some embodiments, the electrolyte salt is one or more selected from the group consisting of NaPF₆, NaN(SO₂RF)₂, and NaBF₂(C₂O₄). In some embodiments, RF is -CF₃, -C₂F₅ or -CF₂CF₂CF₃.

In some embodiments, the electrolyte solution includes a solvent, and the solvent includes at least one selected from the group consisting of chain carbonates, chain carboxylates, cyclic carbonates, ether solvents, sulfone solvents, and nitrile solvents. In some embodiments, the chain carbonates include at least one selected from the group consisting of dimethyl carbonate (DMC), diethyl carbonate (DEC), ethyl methyl carbonate (EMC), methyl propyl carbonate (MPC), methyl isopropyl carbonate (MIPC), methyl butyl carbonate, ethyl propyl carbonate, dipropyl carbonate, and dibutyl carbonate. In some embodiments, the chain carbonates include at least one selected from the group consisting of dimethyl carbonate (DMC), diethyl carbonate (DEC), ethyl methyl carbonate (EMC), and methyl propyl carbonate (MPC). In some embodiments, the chain carboxylates include at least one selected from the group consisting of methyl formate (MF), ethyl formate (EF), methyl propionate (MP), ethyl propionate (EP), propyl propionate (PP), ethyl butyrate (EB), methyl acetate (MA), ethyl acetate (EA), and propyl acetate (PA). In some embodiments, the chain carboxylates include at least one selected from the group consisting of methyl propionate (MP), ethyl propionate (EP), propyl propionate (PP), methyl acetate (MA), ethyl acetate (EA), and propyl acetate (PA). In some embodiments, the ether solvents include at least one selected from the group consisting of dioxolane (DOL), tetrahydrofuran (THF), 2-methyltetrahydrofuran (2Me-THF), tetrahydropyran (THP), 1,2-dimethoxyethane (DME), diethylene glycol dimethyl ether (DG), 1,2-diethoxyethane, and 1,2-dibutoxyethane.

In some embodiments, the electrolyte also optionally includes additives. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery also includes the separator. The type of the separator is not particularly limited in the present application, and any well-known separator with a porous structure having good chemical stability and mechanical stability can be selected.

In some embodiments, the material of the separator can be selected from the group consisting of at least one of glass fiber, non-woven fabric, polyethylene, polypropylene and polyvinylidene fluoride. The separator can be a single-layer film or a multi-layer composite film, which is not specially limited. When the separator is a multi-layer composite film, the material of each layer may be the same or different, which is not particularly limited.

### [Secondary battery]

In one embodiment of the present application, a secondary battery is provided and includes an electrode assembly and an electrolyte solution; and the electrode assembly includes a positive electrode plate, a separator, and a negative electrode plate in any embodiment.

In some embodiments, the positive electrode sheet, the negative electrode sheet and the separator can be made into an electrode assembly by a winding process or a lamination process.

In some embodiments, the secondary battery can include an outer package. The outer package can be used for encapsulating the aforementioned electrode assembly and electrolyte.

In some embodiments, the outer package of the secondary battery can be a hard shell, such as a hard plastic shell, an aluminum shell, and a steel shell. The outer package of the secondary battery can also be a soft package, such as a bag type soft package. The material of the soft package may be plastic, and examples of the plastic may include polypropylene, polybutylene terephthalate, polybutylene succinate, and the like.

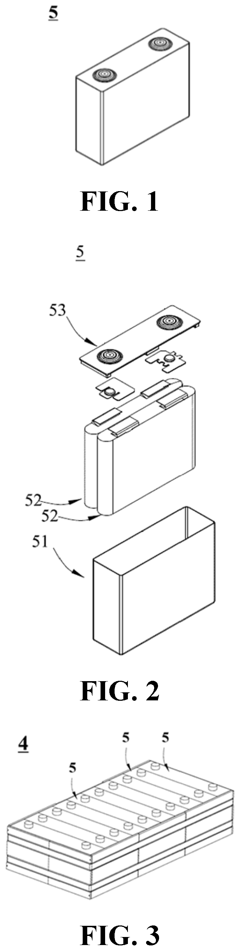

The shape of the secondary battery is not particularly limited in the present application, and may be a cylinder, a square, or any other shape. For example, in FIG. 1, a secondary battery 5 of a square structure is taken as an example. Optionally, the secondary battery is a lithium-ion battery or a sodium-ion battery.

In some embodiments, with reference to FIG. 2, the outer package can include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the secondary battery 5 may be one or more, and may be selected by those skilled in the art according to specific actual requirements.

In some embodiments, the secondary batteries may be assembled into a battery module, the number of secondary batteries included in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

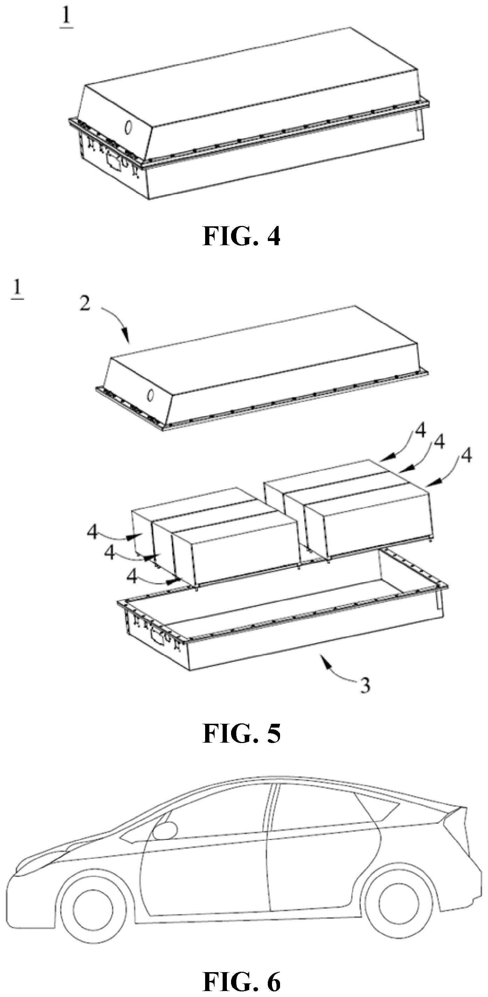

Figs. 4 and 5 show a battery pack 1 as an example. Referring to Figs. 4 and 5, the battery pack 1 may include a battery box and a plurality of battery modules 4 provided in the battery box. The battery box includes an upper box 2 and a lower box 3, wherein the upper box 2 can cover the lower box 3 and forms an enclosed space for accommodating the battery module 4. The plurality of battery modules 4 can be arranged in the battery box in any mode.

In one embodiment of the present application, an electrical apparatus is provided and includes at least one selected from the group consisting of the secondary battery in any embodiment, the battery module in any embodiment, and the battery pack in any embodiment.

The electrical apparatus includes at least one selected from the group consisting of the secondary battery, the battery module, and the battery pack provided by the present application. The secondary battery, the battery module or the battery pack can be used as a power supply for the electric device and can also be used as an energy storage unit for the electric device. The electrical apparatus can include, but is not limited to, a mobile apparatus (e.g., a mobile phone or a laptop), an electric vehicle (e.g., an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery, the battery module, or the battery pack may be selected according to its use requirements.

FIG. 6 is an example of an electrical apparatus. The electrical apparatus is an all-electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the apparatus may be a mobile phone, a tablet, a laptop, etc. The apparatus is generally required to be light and thin, and may use a secondary battery as a power source.

### EXAMPLES

The embodiments of the present application are illustrated below. The embodiments described below are exemplary and are provided only to explain the present application, and should not be construed as limiting the present application. If the specific technology or conditions are not indicated in the embodiments, the technology or conditions described in the literature in the art or in accordance with the product specification shall be followed. Where manufacturers are not specified, the reagents or instruments used are conventional products and are commercially available.

### I. Preparation method

### Example 1

### 1) Preparation of hard carbon

The selected biomass carbon source that was sorghum stalks was washed, dried, and then pulverized by a machine; the biomass carbon source was pre-sintered at 800°C in a nitrogen atmosphere for 2 h; the pre-sintered sample was crushed and sieved by a crusher to form a hard carbon precursor; the hard carbon precursor was then subjected to secondary sieving after sintering at high temperature at 1,200°C in a nitrogen atmosphere for 2 h; the high-temperature sintered product was soaked in deionized water at room temperature to form a hard carbon slurry with solid content of 20%, and the hard carbon slurry was stirred at 1,200 r/min for 1 h; and then the hard carbon slurry was transferred to a centrifuge to remove moisture, and dried to obtain the hard carbon.

### 2) Preparation of negative electrode sheet

The negative electrode active material, the conductive agent acetylene black, the binder styrene-butadiene rubber (SBR), and the thickener sodium carboxymethyl cellulose (CMC-Na) are fully uniformly mixed at a weight ratio of 90:4:4:2 by stirring in the deionized water solvent system to obtain a negative electrode slurry with the solid content of 50%; the negative electrode slurry is uniformly coated at 0.14 g (dry weight)/1,540.25 mm² onto the copper foil being 13 µm in thickness and serving as a negative electrode current collector under a coating speed of 25 m/min; and the copper foil is transferred to a 110°C oven, and then is subjected to cold pressing and slitting to obtain the negative electrode plate.

### 3) Preparation of positive electrode sheet

The positive electrode active material Na₃V₂(PO₄)₂O₂F, the conductive agent acetylene black, and the binder polyvinylidene fluoride (PVDF) are mixed at a weight ratio of 80:10:10 in a proper amount of N-methyl-2-pyrrolidone (NMP), and stirred thoroughly to obtain an uniform positive electrode slurry; the positive electrode slurry is uniformly coated at an amount of 0.28 g (dry weight)/1,540.25 mm² on the aluminum foil being 13 µm in thickness and serving as the positive electrode current collector under a coating speed of 30 m/min; and the aluminum foil is transferred to a 110°C oven, and then is subjected to cold pressing and slitting to obtain the positive electrode plate.

### 4) Preparation of electrolyte solution

In an argon-atmosphere glove box (H₂O content <10 ppm, O₂ content <1 ppm), sodium hexafluorophosphate NaPF₆ is dissolved in organic solvents of ethylene carbonate (EC) and ethyl methyl carbonate (EMC) (volume ratio of EC: EMC = 3:7), and are stirred evenly to obtain an electrolyte solution with a sodium salt concentration of 1 mol/L.

### 5) Separator

A 9 µm polyethylene (PE) porous polymer film is used as a separator.

### 6) Preparation of battery

The positive electrode plate, the separator, and the negative electrode plate are stacked in sequence, the separator is between the positive electrode plate and the negative electrode plate so as to isolate the positive electrode plate from the negative electrode plate; and then positive electrode plate, the separator, and the negative electrode plate are wound to obtain a bare cell; tabs are welded, the bare cell is placed in an outer package, the prepared electrolyte solution is injected into the dried cell, and then the processes of sealing, standing, formation, shaping, and capacity testing are carried out to obtain the sodium secondary battery product in an Example 1.

The batteries in Examples 2 to 4 were prepared by a method similar to the battery in the Example 1, but the water washing speed and/or water washing time were adjusted, with specific parameters shown in Table 1.

The battery in an Example 5 was prepared by a method similar to the battery in the Example 1, but the water washing step was adjusted to be carried out before sintering at high temperature.

The batteries in Examples 6 to 7 were prepared by a method similar to the battery in the Example 1, but the type of the biomass carbon source was adjusted, with specific parameters shown in Table 1.

The battery preparation method in an Example 8 was similar to that in the Example 1, except that during the preparation of the hard carbon, a pickling step was added after sintering at high temperature and before washing with water and was carried out by the following conditions:
the prepared hard carbon particles were soaked in 5% dilute hydrochloric acid to form a hard carbon slurry with a solid content of 20%; the hard carbon slurry was stirred in a polytetrafluoroethylene container at a speed of 1,200 r/min for 2 h; then the hard carbon slurry was transferred to a centrifuge to remove moisture, and then was subjected to secondary washing by the method in the Example 1 to reduce the residual acid and impurities in the hard carbon.

The battery preparation method in an Example 9 was basically the same as that in the Example 1, except that during the preparation of the hard carbon, the pickling process was carried out after pre-sintering and before sintering at high temperature and was carried out by the following conditions:
the pre-sintered product was soaked in 5% dilute hydrochloric acid to form a hard carbon slurry with a solid content of 20%; the hard carbon slurry was stirred in a polytetrafluoroethylene container at a speed of 1,200 r/min for 2 h; then the hard carbon slurry was transferred to a centrifuge to remove moisture, and then was subjected to secondary washing by the method in the Example 1 to reduce the residual acid and impurities.

The battery preparation method in a Comparative Example 1 was basically the same as that in the Example 1, except that there was no water washing step in Comparative Example 1.

The battery preparation method in a Comparative Example 2 was basically the same as that in the Example 1, except that the water washing speed and water washing time in the water washing step were adjusted, as shown in Table 1.

The battery preparation method in a Comparative Example 3 was basically the same as that in the Example 6, except that there was no water washing step in the Comparative Example 3.

The battery preparation method in a Comparative Example 4 was basically the same as that in the Example 7, except that there was no water washing step in the Comparative Example 4.

### II. Test method

### 1. Performance test of hard carbon

### 1) Test method for mass ratio of water-soluble cations

100 g of hard carbon was dispersed in 400 g of deionized water to prepare a hard carbon slurry with a solid content of 20%; the hard carbon slurry was stirred and dispersed at a speed of 1,200 r/min for 120 min; the resulting hard carbon slurry was filtered, the filtrate was collected, 8 mL of the filtrate was measured and added to 2 mL of Lefort aqua regia (volume ratio of HNO₃: HCl was 3:1) for microwave digestion; then the filtrate was transferred to an inductively coupled plasma optical emission spectrometer (ICP) to test the type and mass of different ions in the filtrate. By summing and converting, the total mass of the water-soluble cations per unit mass of hard carbon was obtained. The inductively coupled plasma optical emission spectrometer was a single quadrupole-rod inductively coupled plasma mass spectrometer (SQ-ICP-MS) of Thermo Scientific.

### 2) Test of mass ratio of elements in hard carbon

The mass ratio of the elements in the hard carbon was tested by the inductively coupled plasma optical emission spectrometer (ICP); and the inductively coupled plasma optical emission spectrometer was the single quadrupole-rod inductively coupled plasma mass spectrometer (SQ-ICP-MS) of Thermo Scientific. The test procedure is as follows: 0.2 g of hard carbon was weighed and added to 10 ml of Lefort aqua regia (a mixture of HNO₃ and HCl at a volume ratio of 3:1), and then subjected to microwave digestion in a microwave digestion instrument (Anton-Paar Multiwave 7000) at a microwave frequency of 2,450 MHz for 5 min; and then, the sample was transferred to the inductively coupled plasma optical emission spectrometer for testing to obtain the mass ratio of the different elements per unit mass of the hard carbon.

### 3) Test of true density of hard carbon

Based on Archimedes principle, skeleton density (also called true density) testing and analysis using helium (He) as a probe can provide accurate values for skeleton density because helium can penetrate all open pores except closed ones. The van der Waals (vd W) radius or aerodynamic diameter of a measuring medium (He) is small enough to ensure an effective detection depth.

The true density test of hard carbon is specifically as follows: the mass M of hard carbon was weighed and placed in a true density tester (Accu Pyc II 1340 analyzer) at 25°C; a test system was sealed, and helium was charged according to the procedure. The gas pressure in a sample chamber and an expansion chamber was detected and the gas volume in both the sample chamber and the expansion chamber was calculated according to an ideal gas state equation (v=nRT/P), so as to obtain the gas volume of the sample chamber and the expansion chamber; and the gas volume of the hard carbon arranged under certain temperature and pressure conditions was obtained, which was the true volume V of the hard carbon. The true density of hard carbon was M/V, the unit of the true density was g/cm³.

### 4) Gram volume test of hard carbon

The gram volume test was carried out on button cells; the negative electrode slurry prepared in the example was manually coated to produce positive electrode plates of the button cells, and metallic sodium plates were used as the negative electrode electrodes of the button cells; the prepared button cells were tested by a Neware 5V 10mA testing cabinet. The testing procedure was as follows: the button cells were discharged at a constant current of 0.05 C for 2 h, then discharged at a constant current of 0.1 C until reaching a lower voltage limit of 0.05 V; after standing for 5 min, the cells were charged at a constant current of 0.1 C until reaching an upper voltage limit of 2.0 V, and then were charged to 0.03 C at a constant voltage; then, the cells were discharged at a constant current of 0.1 C until reaching the lower voltage limit of 0.05 V, and the actual discharge capacity of the button cells was recorded. Gram volume of hard carbon = actual discharge capacity of button cell / [mass percentage of hard carbon × (electrode plate mass - aluminum foil mass)] × 100%.

### 2. Property test of negative electrode slurry

### 1) Viscosity test of slurry

An appropriate rotor was selected, the viscometer was fixed, the negative electrode slurry was placed below the viscometer so that the slurry just covered the index line of the rotor; instrument model: Shanghai Fangrui NDJ-5S; rotor: #63 (2,000-10,000 mPa.s), #64 (10,000-50,000 mPa.s); rotation speed: 12 r/min; test temperature: 25°C; test time: 5 min; and the data was read once the reading stabilizes.

### 3. Performance test of battery

### 1) Cycle count test of battery

At 25°C, the battery was charged to 3.95 V at a constant current of 1/3 C and then charged at a constant voltage of 3.95 V until the current was 0.05 C; after standing for 5 min, the battery was discharged to 1.5 V at 1/3 C; the obtained capacity was recorded as the initial capacity C0, with the cutoff condition of Pn ≦ 80%. The above steps were repeated on the same battery, while the battery discharge capacity Cn after the nth cycle was simultaneously recorded, and thus the battery capacity retention rate after each cycle was calculated as Pn=Cn/C0×100%; and if Pn ≤ 80%, the test was stopped and the number of cycles was recorded.

### 2) Initial efficiency test of battery

At 25°C, the battery was charged to 4.2 V at a constant current of 1/3 C and then charged at a constant voltage of 4.2 V until the current was 0.05 C, and the charge capacity was recorded as C1; and after standing for 5 min, the battery was discharged to 1.5 V at 1/3 C, and the obtained capacity was recorded as the initial discharge capacity C0. The ratio C0/C1 was recorded as the first efficiency.

### III. Analysis of test results of each embodiment and Comparative Example

The batteries in each embodiment and Comparative Example were prepared according to the above method, and various performance parameters were measured, with the results shown in the table below.

**Table 1**

| No. | Preparation | | | | |
|---|---|---|---|---|---|
| | Biomass carbon source | Water washing step | Water washing speed (rpm) | Water washing time (h) | Pickling step |
| Example 1 | Sorghum stalk | After sintering at high temperature | 1200 | 1 | / |
| Example 2 | Sorghum stalk | After sintering at high temperature | 1200 | 0.5 | / |
| Example 3 | Sorghum stalk | After sintering at high temperature | 800 | 1 | / |
| Example 4 | Sorghum stalk | After sintering at high temperature | 400 | 1 | / |
| Example 5 | Sorghum stalk | Before sintering at high temperature | 1200 | 1 | / |
| Example 6 | Coconut shell | After sintering at high temperature | 1200 | 1 | / |
| Example 7 | Wood | After sintering at high temperature | 1200 | 1 | / |
| Example 8 | Sorghum stalk | Wash with water after pickling | 1200 | 1 | Pickle after sintering at high temperature |
| Example 9 | Sorghum stalk | After sintering at high temperature | 1200 | 1 | After pre-sintering and before sintering at high temperature |
| Comparative Example 1 | Sorghum stalk | / | / | / | / |
| Comparative Example 2 | Sorghum stalk | After sintering at high temperature | 50 | 0.5 | / |
| Comparative Example 3 | Coconut shell | / | / | / | / |
| Comparative Example 4 | Wood | / | / | / | / |

| No. | Biomass-based hard carbon | | | | | | | | | Slurry | Battery | |
|---|---|---|---|---|---|---|---|---|---|---|---|---|
| | Mass ratio of water-soluble cations /ppm | | | | | Total mass ratio of water-soluble cations (ppm) | Mass ratio of sodium element (ppm) | True density (g/cm³) | Gram volume (mAh/g) | Viscosity (MPa·s) | Initial efficiency of battery | Cycle count |
| | Na⁺ | K⁺ | Mg² + | Ca² + | Al³ + | | | | | | | |
| Example 1 | 25 | 15 | 15 | 20 | 10 | 85 | 37 | 1.46 | 326 | 13200 | 87.7% | 124 3 |
| Example 2 | 50 | 20 | 30 | 40 | 25 | 165 | 89 | 1.46 | 324 | 11200 | 87.4% | 114 5 |
| Example 3 | 150 | 30 | 25 | 35 | 40 | 280 | 235 | 1.46 | 325 | 9850 | 87.2% | 108 7 |
| Example 4 | 260 | 50 | 60 | 50 | 50 | 470 | 389 | 1.46 | 326 | 6780 | 87.0% | 987 |
| Example 5 | 40 | 35 | 20 | 30 | 25 | 150 | 52 | 1.61 | 314 | 12300 | 87.6% | 123 0 |
| Example 6 | 20 | 20 | 10 | 40 | 10 | 100 | 28 | 1.52 | 300 | 13500 | 86.5% | 118 9 |
| Example 7 | 15 | 40 | 10 | 40 | 25 | 130 | 23 | 1.56 | 280 | 13400 | 87.1% | 121 0 |
| Example 8 | <5 | <5 | <5 | <5 | <5 | <5 | 6 | 1.47 | 302 | 15700 | 72.0% | 860 |
| Example 9 | 20 | 10 | 10 | 15 | 5 | 60 | 28 | 1.7 | 287 | 13200 | 83.0% | 105 0 |
| Comparative Example 1 | 115 0 | 75 | 90 | 600 | 100 | 2015 | 2304 | 1.48 | 324 | 1200 | / | / |
| Comparative Example 2 | 520 | 11 5 | 70 | 230 | 55 | 990 | 762 | 1.48 | 320 | 3100 | / | / |
| Comparative Example 3 | 145 0 | 50 | 40 | 640 | 170 | 2350 | 1680 | 1.47 | 312 | 830 | / | / |
| Comparative Example 4 | 165 0 | 90 | 90 | 400 | 70 | 2300 | 2540 | 1.45 | 290 | 860 | / | I |

**Table 2**

| No. | Mass ratio of silicon element in hard carbon (ppm) |
|---|---|
| Example 1 | 350 |
| Example 2 | 383 |
| Example 3 | 383 |
| Example 4 | 383 |
| Example 5 | 383 |
| Example 6 | 540 |
| Example 7 | 476 |
| Example 8 | 245 |
| Example 9 | 289 |
| Comparative Example 1 | 650 |
| Comparative Example 2 | 580 |

The hard carbon in the Comparative Examples contains the water-soluble ions with high mass, so the viscosity of the slurry containing hard carbon is excessively low, making it difficult to coat and shape, or resulting in severe edge thickness after coating; and during the cold pressing process, it is prone to edge cracking, making it difficult to shape.

The comparison between the embodiment and the Comparative Example shows that based on the total mass of the hard carbon, if the total mass ratio of the water-soluble cations in the hard carbon does not exceed 500 ppm, the viscosity of the negative electrode slurry is suitable for coating, and the slurry has good processability.

The comparison between the examples shows that based on the total mass of the hard carbon, if the total mass ratio of water-soluble cations in the hard carbon is 5-450 ppm, the secondary battery has good processability, initial efficiency, and cycle stability.

The comparison between the examples and the Comparative Examples shows that based on the total mass of the hard carbon, if the mass ratio of silicon in the hard carbon does not exceed 570 ppm, the viscosity of the negative electrode slurry is suitable for coating, and the slurry has good processability, and the battery has good cycle stability.

The comparison between the example shows that based on the total mass of the hard carbon, if the mass ratio of the silicon element in the hard carbon is 300-550 ppm, the secondary battery has good processability, gram volume, initial efficiency, and cycling performance.

The comparison between the Examples 1 to 8 and the Example 9 shows that if the true density of the hard carbon is 1.45g/cm³-1.65g/cm³, the hard carbon has better pore-forming capability, and the secondary battery has a higher gram volume.

The comparison between the Example 1 and the Example 5 shows that the water washing process carried out after sintering at high temperature helps maintain the pore-forming effect of impurities during the sintering at high temperature step, thus increasing the gram volume of the hard carbon.

The comparison between the Example 1 and the Examples 8 and 9 shows that although pickling can further reduce the content of the water-soluble cations, it will also lead to a decrease in the hard carbon capacity and/or the initial efficiency of the secondary battery.

According to the examples, the treatment method for the hard carbon provided by the present application is suitable for different types of hard carbon, based on which the processability of different hard carbons can be effectively predicted, thus improving the production efficiency and reducing the production costs.

It is to be noted that the present application is not limited to the above embodiments. The above embodiments are merely examples, and any embodiments within the technical solutions of the present application that have the same technical concept and achieve the same functional effects are included within the technical scope of the present application. In addition, other methods that apply various deformations that can be conceived by those skilled in the art to the examples and construct them by combining some of the constituent elements of the embodiments are also included in the scope of the present application, within the scope of the application that do not deviate from the main purpose of the present application.

## Claims

1. A hard carbon, wherein, based on the mass of the hard carbon, the total mass ratio of water-soluble cations in the hard carbon does not exceed 500 ppm.

2. The hard carbon according to claim 1, wherein based on the mass of the hard carbon, the total mass ratio of the water-soluble cations in the hard carbon is 5-450 ppm.

3. The hard carbon according to claim 1 or 2, wherein the water-soluble cations comprise at least one selected from the group consisting of sodium ions (Na⁺), potassium ions (K⁺), magnesium ions (Mg²⁺), calcium ions (Ca²⁺), and aluminum ions (Al³⁺).

4. The hard carbon according to any one of claims 1 to 3, wherein based on the total mass of the hard carbon, the mass ratio of a silicon element in the hard carbon does not exceed 570 ppm.

5. The hard carbon according to any one of claims 1 to 4, wherein based on the total mass of the hard carbon, the mass ratio of a silicon element in the hard carbon is 300-550 ppm.

6. The hard carbon according to any one of claims 1 to 5, wherein based on the total mass of the hard carbon, the mass ratio of any one of the water-soluble sodium ions, water-soluble potassium ions, water-soluble magnesium ions, water-soluble calcium ions, and water-soluble aluminum ions in the hard carbon is 1-260 ppm.

7. The hard carbon according to any one of claims 1 to 6, wherein the hard carbon has a true density of 1.45g/cm³-1.65g/cm³ at room temperature.

8. The hard carbon according to any one of claims 1 to 7, wherein the hard carbon has a true density of 1.45g/cm³-1.6g/cm³ at room temperature.

9. A preparation method for a hard carbon, comprising:
washing with water to ensure that, based on the mass of the hard carbon, the total mass ratio of water-soluble cations in the hard carbon does not exceed 500 ppm.

10. The preparation method according to claim 9, wherein
in the preparation method, based on the mass of the hard carbon, the total mass ratio of the water-soluble cations in the hard carbon is 5-450 ppm.

11. The preparation method according to claim 9 or 10, comprising the following specific steps:
providing a biomass-based carbon source;
pre-sintering the carbon source to prepare a precursor;
sintering the precursor at a high temperature to prepare a product; and
washing the product with water to prepare the hard carbon.

12. The preparation method according to any one of claims 9 to 11, wherein
the precursor and the product are not treated with acid.

13. A secondary battery, comprising the hard carbon according to any one of claims 1 to 8 or hard carbon prepared by the preparation method according to any one of claims 9 to 12.

14. An electrical apparatus, comprising the secondary battery according to claim 13.
